# EUROPÄISCHE PATENTSCHRIFT

(11) **EP 0 464 244 B1**
(45) Veröffentlichungstag und Bekanntmachung des Hinweises auf die Patenterteilung: **14.06.1995**
(21) Anmeldenummer: 90112781.1
(22) Anmeldetag: 04.07.1990
(51) Int. Cl.: G01N 27/12

(54) **Sensor zur Erfassung reduzierender Gase**
Sensor for detecting reducing gases
Capteur pour la détection de gaz réducteurs

(43) Veröffentlichungstag der Anmeldung: 08.01.1992
(73) Patentinhaber: SIEMENS AKTIENGESELLSCHAFT, 80333 München (DE)
(72) Erfinder: Fleischer, Maximilian, Dipl.-Phys., D-8000 München 19 (DE); Meixner, Hans, Dr. Dipl.-Phys., D-8013 Haar (DE)

(56) Entgegenhaltungen:
- DE-A- 3 700 256
- DE-B- 2 007 937
- DE-B- 2 651 160
- FR-A- 2 298 104
- FR-A- 2 393 302
- GB-A- 1 477 082
- US-A- 4 453 151

## Beschreibung

Die vorliegende Erfindung betrifft einen Sensor zur Erfassung reduzierender Gase auf der Grundlage eines halbleitenden, für reduzierende Gase sensitiven Materials, das aus einem oder mehreren halbleitenden Metalloxiden besteht, mit einer Kontaktelektroden-Anordnung zur Messung der elektrischen Leitfähigkeit des Materials, einer Heizanordnung zum Heizen des Sensors bei einer vorbestimmten Betriebstemperatur, einer Schutzhülle, die den Sensor vor äußeren mechanischen Einflüssen schützt, und einem Befestigungssockel.

Zur kalorimetrischen Bestimmung des Gehalts an reduzierendem Gas eines Gasgemisches ist bereits eine Sensor-Anordnung bekannt, bei der an einem Katalysator eine Oxidation des reduzierenden Gases stattfindet, wobei über die Wärmeentwicklung auf den Gehalt an reduzierendem Gas geschlossen wird, vergl. GB-PS 892 530 und J. G. Firth: Trans. Faraday Soc. 62 S 2566 (1966), Sensor, der Fa. Sonoxo beschrieben in R. D. Betta, B. Bynum: A new Combustion Control Sensor, SENSORS April 1987). Ein derartiger Sensor der als "Pellistor" bezeichnet wird, hat den Nachteil, daß eine Fertigung mit reproduzierbaren Eigenschaften der Sensoren kaum möglich ist. Außerdem unterliegt ein derartiger Sensor starken Alterungseinflüssen. Das Meßprinzip verlangt darüber hinaus Oxidationsvorgänge, die zwangsläufig die Zusammensetzung des Gasgemisches verändern.

Die elektrische Leitfähigkeit geeigneter halbleitender Metalloxide ist bei ausreichend hohen Temperaturen abhängig vom Gehalt an oxidierenden und reduzierenden Gasen der sie umgebenden Atmosphäre. Herkömmlicherweise werden als Materialien ZnO und SnO₂ zur Herstellung von derartigen Sensoren verwendet, bei denen durch Zusatz von Edelmetall-Katalysatoren (Pd, Pt, Sb) die Empfindlichkeit auf spezielle reduzierende Gase erhöht wird, vergl. "Figaro" Gas-Sensor, Watson and Jates, 1985 Electron. Eng. S. 47, speziell für CO: Y Okayama et al. Proc. Int. Meeting Chem. Sensors, Fukuoka, Japan, 1983, Editor. T. Seiyama et al.; für CH₄ z.B. S. Sakai 1983, European Patent Application 115182.

Ein alternatives Material zur Erfassung reduzierender Gase ist Sn⁴⁺ dotiertes Alpha-Fe₂O₃ (Y. Nakatany et al. Proc. Int. Meeting Chem. Sensors, Fukuoka, Japan, 1983, Editor. T. Seiyama et al.). Ein Nachteil dieser Materialien besteht in einer mangelhaften Langzeitstabilität bei höheren Temperaturen. Außerdem ist eine ausgeprägte Querempfindlichkeit für Sauerstoff zu beobachten.

Aus der GB-PS 1 374 575 ist ein Sensor zum Erfassen beispielsweise reduzierender Gase bekannt auf der Grundlage eines halbleitenden, für reduzierende Gase sensitiven Materials, das aus einem oder mehreren halbleitenden Metalloxiden besteht, mit einer Kontaktelektroden-Anordnung zur Messung der elektrischen Leitfähigkeit des Materials und einer Heizanordnung zum Heizen des Sensors bei einer vorbestimmten Betriebstemperatur.

Das halbleitende Metalloxid besteht bei diesem bekannten, auch sauerstoffsensitiven Sensor im wesentlichen aus einem halbleitenden Metalloxid mit einem ersten und ggf. einem zweiten Aktivators in Form weiterer Metalloxide, aus dem ein kompakter, im wesentlich kugelförmiger Widerstandskörper gebildet ist. Ein derartiger Widerstandskörper weist eine relativ hohe Erfassungs-Reaktionszeit auf, ist nur mit aufwendigen Verfahren herstellbar und stellt einen Sensor-Bestandteil dar, der die Fertigung von Sensoren mit gut reproduzierbaren Eigenschaften erschwert.

Weiterhin ist aus der GB 1 562 623 eine Vorrichtung zur Bestimmung der Zusammensetzung von Abgas bei Verbrennungsprozessen bekannt. Auf einem elektrisch isolierenden Substrat ist eine poröse Metalloxidschicht in Dickschichtweise aufgetragen. Weiterhin befindet sich auf dem Substrat eine Heizanordnung, um den Sensor auf die gewünschte Betriebstemperatur von 900°C zu erwärmen. Die Leitfähigkeit der Metalloxidschicht ändert sich entsprechend der Konzentation von oxidierenden oder reduzierenden Gasen. Um die Reaktionszeit zu verbessern, wird eine poröse Metalloxid-Dickfilmschicht verwendet, weil die Reaktivität der Metallschicht entscheidend von der dem Gas ausgesetzten Oberfläche abhängt.

Der vorliegenden Erfindung liegt die Aufgabe zugrunde, einen Sensor der eingangs genannten Art und gemäß dem Oberbegriff des Patentanspruchs 1 zu schaffen, der kostengünstig herstellbar ist, eine relativ kleine Erfassungs-Reaktionszeit aufweist und im übrigen mit gut reproduzierbaren Eigenschaften gefertigt werden kann.

Zur Lösung dieser Aufgabe wird ein Sensor nach dem Oberbegriff des Patentanspruchs 1 vorgeschlagen, der die im kennzeichnenden Teil des Patentanspruchs 1 angegebenen Merkmale aufweist.

Vorteilhafte Weiterbildungen der Erfindung sind durch die in den Unteransprüchen angegebenen Merkmale gekennzeichnet.

Ga₂O₃ ist bei Temperaturen über 400 °C ein n-Halbleiter. Über 850 °C steht der Sauerstoffgehalt des Materials in rascher Wechselwirkung mit dem Sauerstoffgehalt der Umgebungsatmosphäre, so daß die spezifische elektrische Leitfähigkeit des Materials ein Maß für den gegenwärtig herrschenden Sauerstoffpartialdruck ist.

Demzufolge kann Ga₂O₃ bei ausreichend hohen Temperaturen als Sauerstoffsensor verwendet werden, wie aus der GP-PS 1 529 461 bekannt ist.

Untersuchungen haben ergeben, daß unter 850 °C die Sauerstoffdiffusion durch das Gitter abnimmt und bei Temperaturen unter 700 °C zum Erliegen kommt. Es liegt eine durch die Temperatur regelbare Sauerstoffsensitivität vor.

Unter 700 °C tritt keine Sauerstoffsensitivität, dafür jedoch eine starke Sensitivität gegenüber reduzierenden Gase (z. B. CO oder H₂) auf, die eine Folge von Oberflächenwechselwirkungen ist. Durch geeignete Wahl der Betriebstemperatur des Sensors kann ein Maximum der Sensitivität gegenüber einem reduzierendem Gas erreicht werden.

Die durch die Erfindung erzielbaren Vorteile sind:
- Langzeitstabilität des Sensors,
- keine Querempfindlichkeit für O₂,
- verfälschungsfreie Erfassung reduzierender Gase (Ga₂O₃ ist katalytisch nichtaktiv, d. h. es erfolgt keine Wegoxidation reduzierender Gase bei Vorhandensein von O₂),
- durch die benutzte Dünnschichttechnologie kurze Ansprechzeit,
- einfache reproduzierbare Herstellung,
- Miniaturisierbarkeit und einfache Einbindung in Sensorsysteme

Erfindungsgemäß ist vorgesehen, daß das für reduzierende Gase sensitive Material aus Ga₂O₃-Keramik besteht und daß die vorbestimmte Betriebstemperatur unter 700 °C, vorzugsweise in einem Bereich von 550 - 600 °C, liegt. Das für reduzierende Gase sensitive Material als Ga₂O₃-Dünnschicht ist auf einem elektrisch nichtleitenden Trägerkörper ausgebildet. Der Trägerkörper besteht vorzugsweise aus einem BeO-Körper. Der Trägerkörper kann auch mit einer Trägerabdeckschicht, vorzugsweise aus BeO, versehen sein, auf die die Dünnschicht aufgebracht ist. Erfindungsgemäß ist in Weiterbildung auch vorgesehen, daß der Trägerkörper mit einer Trägerabdeckschicht aus SiO₂ versehen ist, auf die die Dünnschicht aufgebracht ist.

Die Kontaktelektroden-Anordnung ist entweder direkt auf den Trägerkörper aufgebracht, auf die Trägerabdeckschicht aufgebracht oder in die Dünnschicht eingebettet.

Die Dicke der Dünnschicht beträgt zwischen 0,5 und 10 »m, vorzugsweise 1 bis 2 »m. Die Dicke der Kontaktelektroden beträgt zwischen 1 und 10 »m, vorzugsweise 2 bis 3 »m. Vorzugsweise bestehen die Kontaktelektroden aus Pt.

Eine vorteilhafte Weiterbildung der Erfindung sieht vor, daß in Nachbarschaft des für reduzierende Gase sensitiven Materials ein Temperatursensor angeordnet ist, der die Ist-Betriebstemperatur erfaßt und dessen Erfassungssignal vorzugsweise zur Regelung auf die Soll-Betriebstemperatur verwendet wird.

Es kann auch vorgesehen sein, daß auf dem Trägerkörper eine Vielzahl von gleichartigen Sensoren und/oder andersartigen Sensoren angeordnet ist.

Eine vorteilhafte Ausgestaltung der Erfindung sieht vor, daß auf dem Trägerkörper paarweise zumindest ein gasdicht abgedeckter Sensor und nicht ein nichtabgedeckter Sensor zur Erzielung einer Kompensation der Temperaturabhängigkeit der elektrischen Leitfähigkeit des Sensors angeordnet sind. Der gasdicht abgedeckte Sensor und der nichtabgedeckte Sensor können beispielsweise in Reihenschaltung den einen Brückenzweig einer Wheatstone-Brücke bilden. Der andere Brückenzweig ist in diesem Fall aus einer Reihenschaltung zweier ohm'scher Widerstände gebildet. Die Potentialdifferenz zwischen den Verbindungspunkten zwischen den beiden Sensoren einerseits und den zwei ohm'schen Widerständen des anderen Brückenzweiges andererseits dient als Ausgangssignal.

Die Kontaktelektroden sind jeweils mit einer Anschlußelektrode, die aus Pt besteht, verbunden, wobei die Anschlußelektroden aus dem Sensor herausgeführt sind und zur Erzielung eines katalytisch nichtaktiven Sensors mit einer gasdichten Schutzschicht bedeckt sind.

Die für die reduzierende Gase sensitive Dünnschicht wird vorzugsweise durch HF-Sputtern aufgebracht, wobei als Materialquelle ein Ga₂O₃-Keramiktarget dient, wobei der Trägerkörper auf eine Temperatur von vorzugsweise 500 °C aufgeheizt wird und wobei dem Sputtergas Argon ein Sauerstoffanteil im Bereich von 10 bis 30, vorzugsweise 20 Volumenprozent, beigemischt wird. Die Kontaktelektroden werden vorzugsweise mittels Siebdruck aufgebracht. Die Kontaktelektroden können alternativ dazu mittels Aufsputtern eines Pt-Films aufgebracht und mittels Photolithographie und anschließender Plasmaätzung strukturiert werden.

Ein vorteilhaftes Verfahren zur Herstellung des erfindungsgemäßen Sensors sieht vor, daß in einem ersten Schritt eine erste Lage der Ga₂O₃-Dünnschicht aufgebracht wird, daß in einem zweiten Schritt auf die erste Lage der Ga₂O₃-Dünnschicht die Kontaktelektroden-Anordnung aufgebracht wird und daß in einem dritten Schritt eine zweite Lage der Ga₂O₃-Dünnschicht zur Einbettung der Kontaktelektroden-Anordnung aufgebracht wird.

Zur Einstellung der Stöchiometrie der Ga₂O₃-Dünnschicht und zum Erzielen der erforderlichen Kristallstruktur der Ga₂O₃-Dünnschicht wird zweckmäßigerweise ein Temperprozeß an Luft bei Temperaturen um vorzugsweise 1100 °C durchgeführt. Zur Einstellung der Stöchiometrie der Ga₂O₃-Dünnschicht und zum Erzielen der erforderlichen Kristallstruktur der Ga₂O₃-Dünnschicht kann auch ein Temperprozeß unter reduzierenden Bedingungen bei Temperaturen um vorzugsweise 1100 °C durchgeführt werden.

Im folgenden wird die Erfindung anhand mehrerer Figuren im einzelnen beschrieben.
- Fig. 1: zeigt die Draufsicht eines Ausführungsbeispiels der Erfindung, bei dem zum Zwecke einer Betriebstemperaturregelung außer dem eigentlichen Sensor ein Thermoelement auf einem Trägerkörper angeordnet ist.
- Fig. 2: zeigt die Draufsicht eines weiteren Ausführungsbeispiels der Erfindung, bei dem zum Zwecke einer Betriebstemperaturregelung außer dem eigentlichen Sensor eine Widerstandsschleife auf einem Trägerkörper angeordnet ist.
- Fig. 3: zeigt die Druntersicht des in Fig. 1 gezeigten Trägerkörpers mit einer Heizanordnung zum Heizen des Sensors.
- Fig. 4: zeigt eine Längsschnittansicht des Sensors gemäß einem Ausführungsbeispiel, bei dem eine Elektrodenanordnung direkt auf einem Trägerkörper sitzt und von einer sensitiven Schicht bedeckt ist.
- Fig. 5: zeigt eine Längsschnittansicht des Sensors gemäß einem anderen Ausführungsbeispiel, bei dem eine Elektrodenanordnung auf einer Trägerkörper-Abdeckschicht sitzt und von einer sensitiven Schicht bedeckt ist.
- Fig. 6: zeigt eine Längsschnittansicht des Sensors gemäß einem weiteren Ausführungsbeispiel, bei dem eine Elektrodenanordnung in eine auf einem Trägerkörper liegende sensitive Schicht eingebettet ist.
- Fig. 7: zeigt die Draufsicht einer Anordnung gemäß einem weiteren Ausführungsbeispiel, bei dem ein gasdicht abgedeckter Sensor und ein nichtabgedeckter Sensor zum Zwecke der Kompensation der Temperaturabhängigkeit der elektrischen Leitfähigkeit des Sensors angeordnet sind.
- Fig. 8: zeigt die Draufsicht eines Sensorgehäuses für den erfindungsgemäßen Sensor.
- Fig. 9: zeigt die Längsschnittansicht des Sensorgehäuses gemäß Fig. 8.
- Fig. 10: zeigt ein Balkendiagramm, das die Temperaturabhängigkeit der Sensitivität des erfindungsgemäßen Sensors darstellt.
- Fig. 11: zeigt ein Balkendiagramm, das die Temperaturabhängigkeit der H₂-Sensitivität einer Ga₂O₃-Dünnschicht darstellt.
- Fig. 12: zeigt eine Kennlinienschar mit CO-Kennlinien des erfindungsgemäßen Sensors.
- Fig. 13: zeigt ein Diagramm, das die Stabilität des erfindungsgemäßen Sensors bei einer Betriebstemperatur von 600°C veranschaulicht.
- Fig. 14: zeigt die H₂-Kennlinie einer 1 »m-Ga₂O₃-Dünnschicht bei einer Betriebstemperatur von 600 °C.

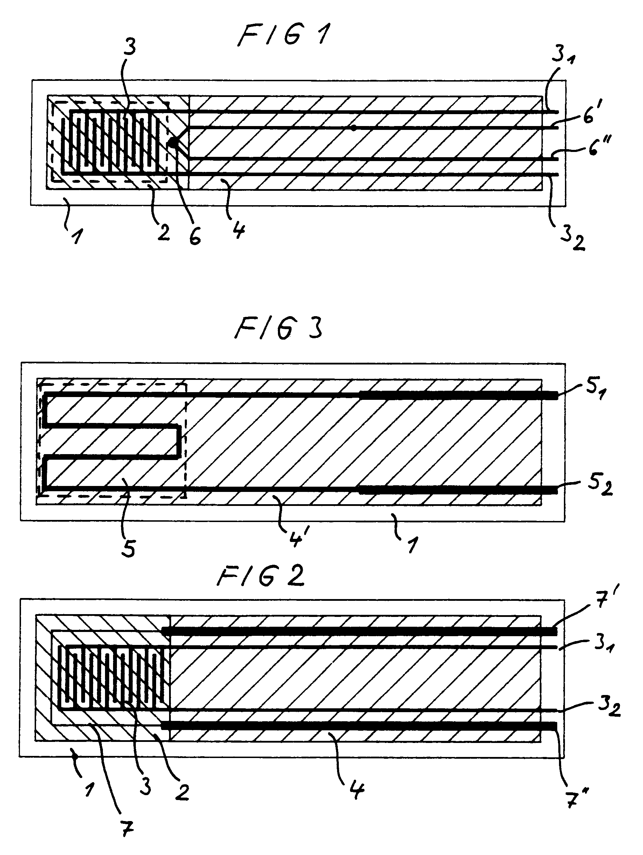

Wie bereits erläutert, zeigt Fig. 1 die Draufsicht eines Ausführungsbeispiels der Erfindung, bei dem zum Zwecke einer Betriebstemperaturregelung außer dem eigentlichen Sensor ein Thermoelement 6 auf einem Trägerkörper 1 angeordnet ist. Das Thermoelement 6 ist zusammen mit der Kontaktelektroden-Anordnung 3, die eine interdigitale Struktur aufweist, auf der Ga₂O₃-Dünnschicht 2 angeordnet. Zuleitungsbahnen 3₁ und 3₂, die die Kontaktelektroden-Anordnung 3 von der Außenseite des Sensors her anschließbar machen, sind auf dem Trägerkörper 1 angeordnet und von einer Schutzschicht 4 bedeckt. Zwischen dem Trägerkörper 1 und dieser Schutzschicht 4 liegen außerdem Leiterbahnen 6′, 6˝ zum Verbinden des Thermoelements 6 mit einer externen Meßanordnung.

Fig. 2 zeigt, wie bereits erläutert, die Draufsicht eines weiteren Ausführungsbeispiels der Erfindung, bei dem zum Zwecke einer Betriebstemperaturregelung außer dem eigentlichen Sensor eine Widerstandsschleife 7 zusammen mit der Kontaktelektroden-Anordnung 3 auf der Ga₂O₃-Dünnschicht 2 angeordnet ist. Die Widerstandsschleife 7 ist über Leiterbahnen kleinen elektrischen Widerstands 7′, 7˝ an eine externe Meßeinrichtung anschließbar. Sowohl das Thermoelement gemäß Figur 1 als auch die Widerstandsschleife gemäß Figur 2 sind derart angeordnet, daß sie die Betriebstemperatur der Ga₂O₃-Dünnschicht 2 im Bereich der Kontaktelektroden-Anordnung 3 für Regelzwecke erfassen können.

Fig. 3 zeigt, wie bereits erläutert, die Druntersicht des in Fig. 1 gezeigten Trägerkörpers 1 mit einer Heizanordnung 5 zum Heizen der Dünnschicht 2 bei der erforderlichen Betriebstemperatur. Die Heizanordnung 5 ist über Leiterbahnen 5₁, 5₂ geringen Widerstands an eine externe Heizstromversorgung anschließbar. Diese Leiterbahnen 5₁, 5₂ und die Heizanordnung 5 selbst sind mit einer nichtleitenden Schutzschicht 4′ bedeckt.

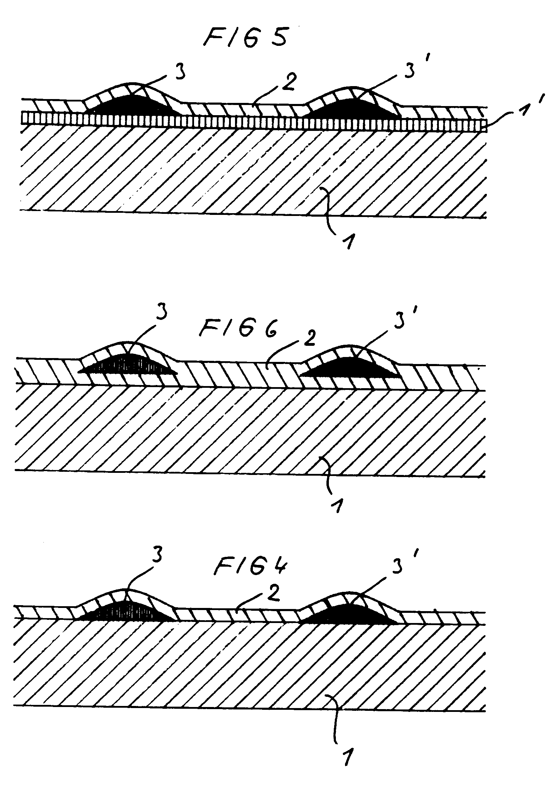

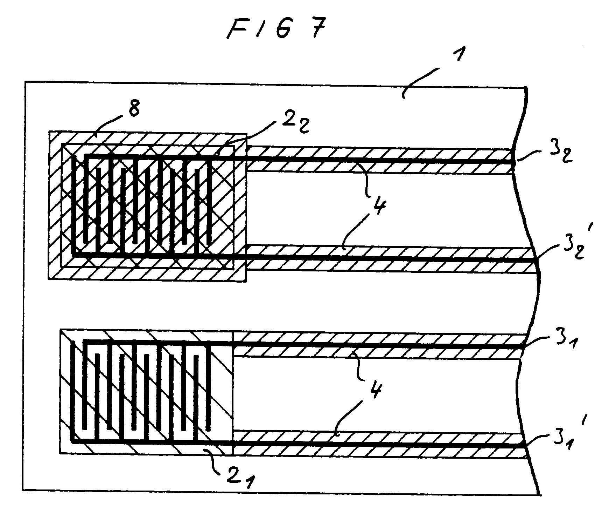

Wie bereits erläutert, zeigt Fig. 4 eine Längsschnittansicht des Sensors gemäß einem Ausführungsbeispiel, bei dem die Elektrodenanordnung 3, 3′ direkt auf dem Trägerkörper 1 sitzt und von einer sensitiven Schicht, nämlich der Ga₂O₃-Dünnschicht 2, bedeckt ist. Gemäß einem weiteren Ausführungsbeispiel, das in Fig. 5 gezeigt ist, sitzt die Elektroden-Anordnung 3, 3′ nicht unmittelbar auf dem Trägerkörper 1, sondern auf einer auf diesem aufgebrachten Trägerkörper-Abdeckschicht 1′. Die Kontaktanordnung 3, 3′ ist wie in dem in Fig. 4 gezeigten Ausführungsbeispiel durch die sensitive Schicht, nämlich die Ga₂O₃-Dünnschicht 2, bedeckt.

Fig. 6 zeigt ein weiteres Ausführungsbeispiel, bei dem die Kontaktelektroden-Anordnung 3, 3′ in die auf dem Trägerkörper 1 aufgebrachte Ga₂O₃-Dünnschicht 2 eingebettet ist.

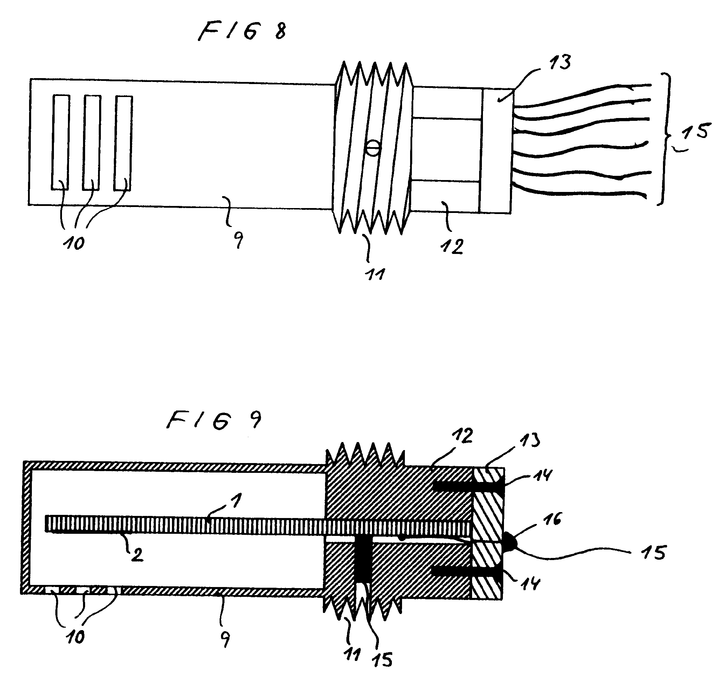

Fig. 7 zeigt, wie bereits erläutert, die Draufsicht einer Anordnung gemäß einem weiteren Ausführungsbeispiel, bei dem ein gasdicht abgedeckter Sensor und ein nichtabgedeckter Sensor zum Zwecke der Kompensation der Temperaturabhängigkeit der elektrischen Leitfähigkeit des Sensors angeordnet sind. Bei diesem Ausführungsbeispiel wird kein Temperaturerfassungselement für den Sensor benötigt. Vielmehr kann durch Auswertung des Widerstandsverhältnisses des mit einer Abdeckschicht 8 gasdicht abgedecktem Sensors 2₂ und des nichtabgedeckten Sensors 2₁ die Temperaturabhängigkeit des Widerstands der Sensorschichten in einem weiten Temperaturbereich ausgeglichen werden. Die beiden Sensoren 2₁ und 2₂ sind jeweils über Leiterbahnen 3₁, 3₁′ bzw. 3₂, 3₂′ mit nach außen führenden Anschlüssen verbunden. Diese Leiterbahnen niedrigen Widerstands sind jeweils individuell oder gemeinsam durch eine Schutzschicht 4 bedeckt.

Fig. 8 zeigt ein Ausführungsbeispiel eines Sensorgehäuses 9 für den erfindungsgemäßen Sensor. Das Sensorgehäuse 9 weist Gaseinlaßschlitze 10 im Bereich des Sensors, einen Gewindebereich 11 zum Einschrauben des Sensorgehäuses 9 beispielsweise in einem Meßstutzen des Abgastrakts eines Pkw-Motors, ein Schraubteil 12, auf das ein Schraubenschlüssel gesetzt werden kann, eine Dichtkappe 13, die das Innere des Sensorgehäuses 9 gegen die umgebende Atmosphäre abdichtet und durch die die erforderlichen Anschlußleitungen 15 geführt sind, sowie eine Madenschraube 16 zum Fixieren des Trägerkörpers 1 innerhalb des Sensorgehäuses 9 auf. Fig. 9 zeigt einen Längsschnitt durch das Sensorgehäuse 9 gemäß Fig. 8. Wie ersichtlich, ist die Dichtkappe 13 mittels Schrauben 14 auf dem Schraubteil 12 befestigt. Die auf dem Trägerkörper 1 des Sensors angeordneten Leiterbahnen sind jeweils mit den betreffenden Anschlußleitungen 15 über Verschweißungspunkte 17 verbunden.

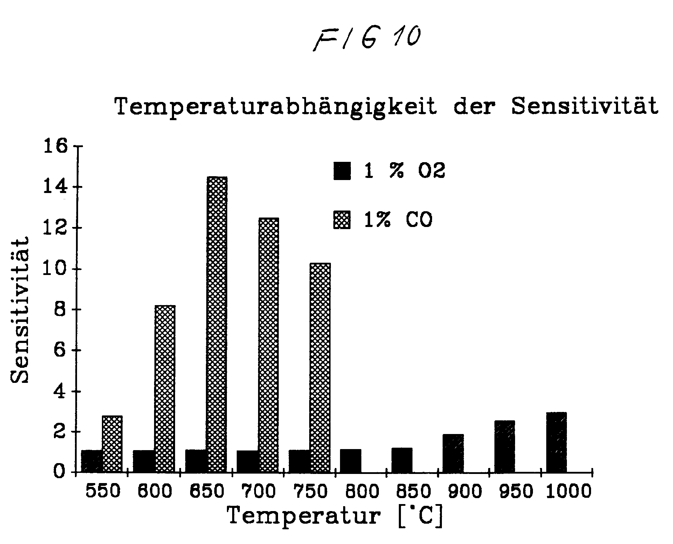

Fig. 10 zeigt ein Balkendiagramm, das die Temperaturabhängigkeit der H₂-Sensitivität einer Ga₂O₃-Dünnschicht darstellt, und zwar bei einem bestimmten CO-Anteil und einem bestimmten O₂-Anteil.

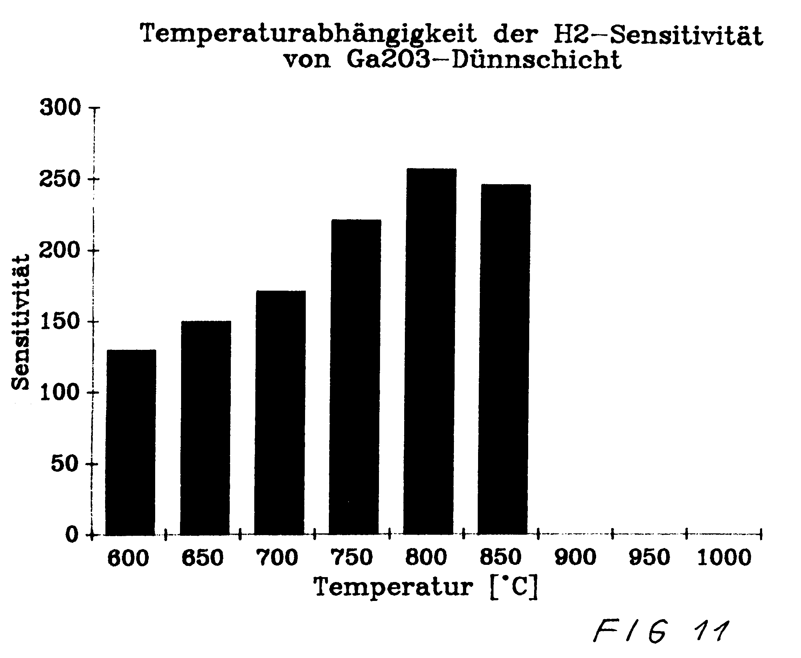

Fig. 11 zeigt ein Balkendiagramm betreffend die Temperaturabhängigkeit der H₂-Sensitivität einer Ga₂O₃-Dünnschicht.

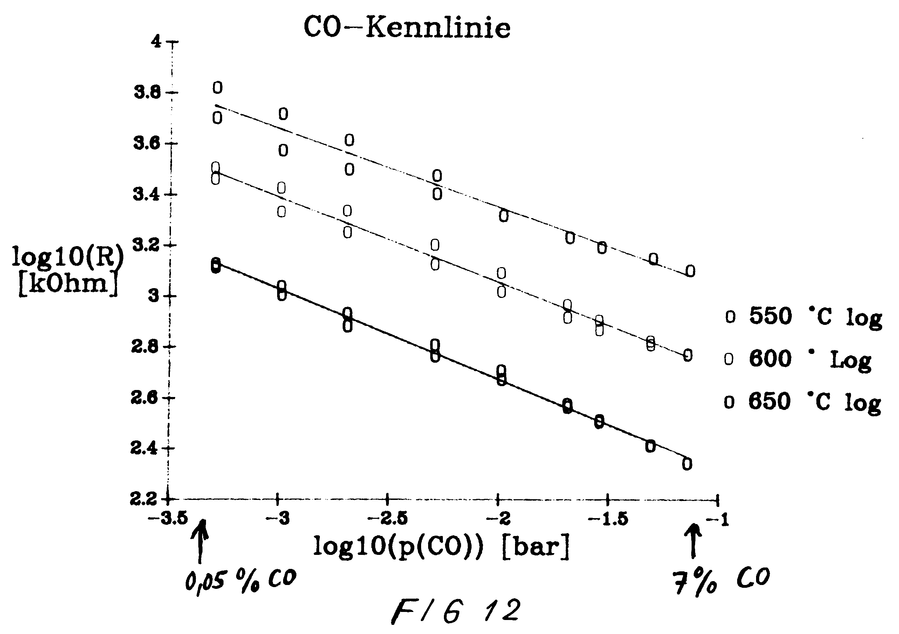

Fig. 12 zeigt eine Kennlinienschar mit CO-Kennlinien des erfindungsgemäßen Sensors und einem eingetragenen bevorzugten Arbeitsbereich.

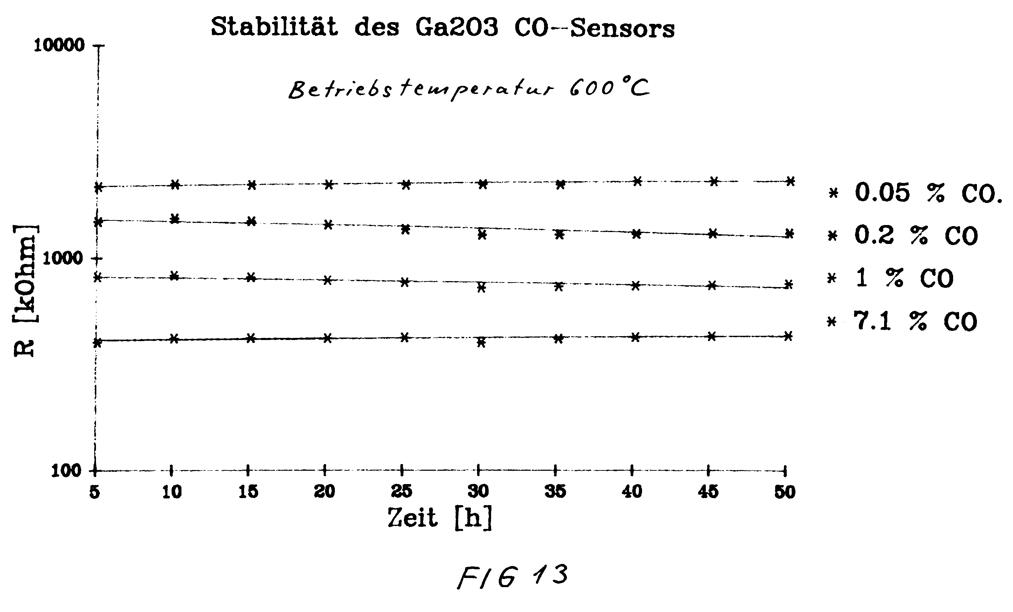

Fig. 13 zeigt ein Diagramm, aus dem die Stabilität des erfindugnsgemäßen Ga₂O₃-Sensors bei einer eingestellten Betriebstemperatur von 600 °C dargestellt bei verschiedenen CO-Anteilen eines Gasgemisches hervorgeht.

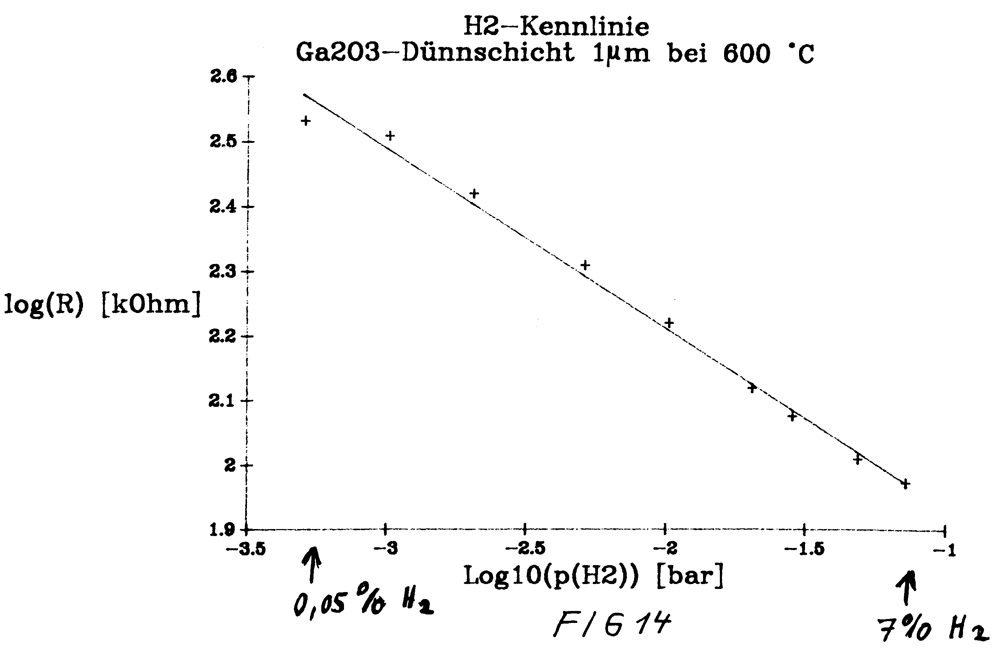

Fig. 14 zeigt eine H₂-Kennlinie einer Ga₂O₃-Dünnschicht mit einer Stärke von 1 »m bei einer Betriebstemperatur von 600 °C.

Der erfindungsgemäße Sensor für reduzierende Gase ist vorteilhaft zur Erfassung der Gasanteile in Verbrennungsabgasen, z. B. bei Feuerungsanlagen, im Abgastrakt eines Kfz-Motors oder zur Erfassung von Prozeßgasen geeignet. Außerdem läßt sich der erfindungsgemäße Sensor vorteilhaft zur Sicherheitsüberwachung bezüglich Explosionsgefahr bei Auftreten von reduzierenden Gasen in Luft, z. B. bei Schlagwetter-Gefährdung in einem Bergwerksstollen, anwenden.

## Patentansprüche

1. Sensor zur Erfassung reduzierender Gase auf der Grundlage eines halbleitenden, für reduzierende Gase sensitiven Materials, das aus einem oder mehreren halbleitenden Metalloxiden besteht, mit einer Kontaktelektroden-Anordnung zur Messung der elektrischen Leitfähigkeit des Materials, einer Heizanordnung zum Heizen des Sensors bei einer vorbestimmten Betriebstemperatur, einer Schutzhülle, die den Sensor vor äußeren mechanischen Einflüssen schützt, und einem Befestigungssockel, **dadurch gekennzeichnet**, daß das für reduzierende Gase sensitive Material aus Ga₂O₃-Keramik besteht und daß die vorbestimmte Betriebstemperatur unter 700 °C, vorzugsweise in einem Bereich von 550 - 600 °C, liegt.

2. Sensor nach Anspruch 1, **dadurch gekennzeichnet**, daß das für reduzierende Gase sensitive Material als Ga₂O₃-Dünnschicht (2) auf einem elektrisch nichtleitenden Trägerkörper (1) ausgebildet ist.

3. Sensor nach Anspruch 2, **dadurch gekennzeichnet**, daß der Trägerkörper (1) aus einem BeO-Körper besteht.

4. Sensor nach Anspruch 2, **dadurch gekennzeichnet**, daß der Trägerkörper (1) mit einer Trägerabdeckschicht (1′), vorzugsweise aus BeO, versehen ist, auf die die Dünnschicht (2) aufgebracht ist.

5. Sensor nach Anspruch 2, **dadurch gekennzeichnet**, daß der Trägerkörper (1) mit einer Trägerabdeckschicht (1′) aus SiO₂ versehen ist, auf die die Dünnschicht (2) aufgebracht ist.

6. Sensor nach Anspruch 3, **dadurch gekennzeichnet**, daß die Kontaktelektroden-Anordnung (3) direkt auf den Trägerkörper (1) aufgebracht ist.

7. Sensor nach Anspruch 4 oder 5, **dadurch gekennzeichnet**, daß die Kontaktelektroden-Anordnung (3) auf die Trägerabdeckschicht (1′) aufgebracht ist.

8. Sensor nach Anspruch 2, **dadurch gekennzeichnet**, daß die Kontaktelektroden-Anordnung (3) in die Dünnschicht (2) eingebettet ist.

9. Sensor nach Anspruch 2, **dadurch gekennzeichnet**, daß die Dicke der Dünnschicht (2) zwischen 0,5 und 10 »m, vorzugsweise 1 bis 2 »m, beträgt.

10. Sensor nach einem der Ansprüche 6 bis 8, **dadurch gekennzeichnet**, daß die Dicke der Kontaktelektroden zwischen 1 und 10 »m, vorzugsweise 2 bis 3 »m, beträgt.

11. Sensor nach einem der Ansprüche 6 bis 8, **dadurch gekennzeichnet**, daß die Kontaktelektroden aus Pt bestehen.

12. Sensor nach Anspruch 1, **dadurch gekennzeichnet**, daß in Nachbarschaft des für reduzierende Gase sensitiven Materials ein Temperatursensor (6; 7) angeordnet ist, der die Ist-Betriebstemperatur erfaßt und dessen Erfassungssignal vorzugsweise zur Regelung auf die Soll-Betriebstemperatur verwendet wird.

13. Sensor nach Anspruch 2, **dadurch gekennzeichnet**, daß auf dem Trägerkörper (1) eine Vielzahl von gleichartigen Sensoren und/oder andersartigen Sensoren angeordnet ist.

14. Sensor nach Anspruch 2, **dadurch gekennzeichnet**, daß auf dem Trägerkörper (1) paarweise zumindest ein gasdicht abgedeckter Sensor (2₂) und ein nichtabgedeckter Sensor (2₁) zur Erzielung einer Kompensation der Temperaturabhängigkeit der elektrischen Leitfähigkeit des Sensors angeordnet sind.

15. Sensor nach Anspruch 14, **dadurch gekennzeichnet**, daß der gasdicht abgedeckte Sensor (2₂) und der nichtabgedeckte Sensor (2₁) in Reihenschaltung den einen Brückenzweig einer Wheatstone-Brücke bilden und daß der andere Brückenzweig aus einer Reihenschaltung zweier ohm'scher Widerstände gebildet ist, wobei die Potentialdifferenz zwischen den Verbindungspunkten zwischen den beiden Sensoren (2₁, 2₂) einerseits und den zwei ohm'schen Widerständen des anderen Brückenzweiges andererseits als Ausgangssignal dient.

16. Sensor nach einer der Ansprüche 1 bis 15, **dadurch gekennzeichnet**, daß die Kontaktelektroden jeweils mit einer Anschlußelektrode (3₁, 3₂), die vorzugsweise aus Pt besteht, verbunden sind, die aus dem Sensor herausgeführt sind und daß die Anschlußelektroden (3₁, 3₂) zur Erzielung eines katalytisch nichtaktiven Sensors mit einer gasdichten Schutzschicht (4) bedeckt sind.

17. Verfahren zur Herstellung des Sensors nach Anspruch 2, **dadurch gekennzeichnet**, daß die für reduzierende Gase sensitive Dünnschicht (2) durch HF-Sputtern aufgebracht wird, wobei als Materialquelle ein Ga₂O₃-Keramikarget dient, wobei der Trägerkörper (1) auf eine Temperatur von vorzugsweise 500 °C aufgeheizt wird und wobei dem Sputtergas Argon ein Sauerstoffanteil im Bereich von 10 bis 30, vorzugsweise 20 Volumenprozent, beigemischt wird.

18. Verfahren zur Herstellung des Sensors nach Anspruch 2, **dadurch gekennzeichnet**, daß die für reduzierende Gase sensitive Dünnschicht (2) mittels Siebdrucktechnologie aufgebracht wird.

19. Verfahren zur Herstellung des Sensors nach Anspruch 17 oder 18, **dadurch gekennzeichnet**, daß die Kontaktelektroden mittels Siebdruck aufgebracht werden.

20. Verfahren zur Herstellung des Sensors nach Anspruch 17 oder 18 **dadurch gekennzeichnet**, daß die Kontaktelektroden mittels Aufsputtern einer Pt-Films aufgebracht und mittels Photolithographie und anschließender Plasmaätzung strukturiert werden.

21. Verfahren zur Herstellung des Sensors nach Anspruch 8, **dadurch gekennzeichnet**, daß in einem ersten Schritt eine erste Lage der Ga₂O₃-Dünnschicht (2) aufgebracht wird, daß in einem zweiten Schritt auf die erste Lage der Ga₂O₃-Dünnschicht (2) die Kontaktelektroden-Anordnung (3) aufgebracht wird und daß in einem dritten Schritt eine zweite Lage der Ga₂O₃-Dünnschicht (2) zur Einbettung der Kontaktelektroden-Anordnung (3) aufgebracht wird.

22. Verfahren zur Herstellung des Sensors nach Anspruch 17, **dadurch gekennzeichnet**, daß zur Einstellung der Stöchiometrie der Ga₂O₃-Dünnschicht (2) und zum Erzielen der erforderlichen Kristallstruktur der Ga₂O₃-Dünnschicht (2) ein Temperprozeß an Luft bei Temperaturen um vorzugsweise 1100 °C durchgeführt wird.

23. Verfahren zur Herstellung des Sensors nach Anspruch 17, **dadurch gekennzeichnet**, daß zur Einstellung der Stöchiometrie der Ga₂O₃-Dünnschicht (2) und zum Erzielen der erforderlichen Kristallstruktur der Ga₂O₃-Dünnschicht (2) ein Temperprozeß unter reduzierenden Bedingungen bei Temperaturen um vorzugsweise 1100 °C durchgeführt wird.

## Claims

1. Sensor for detecting reducing gases on the basis of a semiconducting material sensitive to reducing gases, which consists of one or more semiconducting metal oxides, comprising a contact electrode arrangement for measuring the electrical conductivity of the material, a heating arrangement for heating the sensor at a predetermined operating temperature, a protective cover which protects the sensor against external mechanical influences, and a mounting base, characterized in that the material sensitive to reducing gases consists of Ga₂O₃ ceramic and in that the predetermined operating temperature is below 700°C, preferably in a range of 550 - 600°C.

2. Sensor according to Claim 1, characterized in that the material sensitive to reducing gases takes the form of a Ga₂O₃ thin film (2) on an electrically non-conductive substrate body (1).

3. Sensor according to Claim 2, characterized in that the substrate body (1) is composed of a BeO body.

4. Sensor according to Claim 2, characterized in that the substrate body (1) is provided with a substrate masking layer (1′), preferably made of BeO, to which the thin film (2) has been applied.

5. Sensor according to Claim 2, characterized in that the substrate body (1) is provided with a substrate masking layer (1′) made of SiO₂, to which the thin film (2) has been applied.

6. Sensor according to Claim 3, characterized in that the contact electrode arrangement (3) has been applied directly to the substrate body (1).

7. Sensor according to Claim 4 or 5, characterized in that the contact electrode arrangement (3) has been applied to the substrate masking layer (1′).

8. Sensor according to Claim 2, characterized in that the contact electrode arrangement (3) is embedded in the thin film (2).

9. Sensor according to Claim 2, characterized in that the thickness of the thin film (2) is between 0.5 and 10 »m, preferably 1 and 2 »m.

10. Sensor according to any one of Claims 6 to 8, characterized in that the thickness of the contact electrodes is between 1 and 10 »m, preferably 2 and 3 »m.

11. Sensor according to any one of Claims 6 to 8, characterized in that the contact electrodes are composed of Pt.

12. Sensor according to Claim 1, characterized in that there is arranged, in the vicinity of the material sensitive to reducing gases a temperature sensor (6; 7) which picks up the actual operating temperature and whose pick-up signal is preferably used for closed-loop control using the operating temperature as the set-point.

13. Sensor according to Claim 2, characterized in that there are arranged, on the substrate body (1), a multiplicity of sensors of the same kind and/or sensors of a different kind.

14. Sensor according to Claim 2, characterized in that there are arranged, on the substrate body (1), in pairs, at least one sensor (2₂) masked in a gas-tight manner and a non-masked sensor (2₁), to achieve compensation for the temperature dependence of the electrical conductivity of the sensor.

15. Sensor according to Claim 14, characterized in that the sensor (2₂) masked in a gas-tight manner and the non-masked sensor (2₁) in series connection form the one bridge arm of a Wheatstone bridge, and in that the other bridge arm is formed from a series connection of two ohmic resistors, the potential difference between the connection points between the two sensors (2₁, 2₂) on the one hand and the two ohmic resistors of the other bridge arm on the other hand serving as the output signal.

16. Sensor according to any one of Claims 1 to 15, characterized in that the contact electrodes are in each case connected to a connecting electrode (3₁, 3₂) which is preferably composed of Pt and which is run out from the sensor, and in that the connecting electrodes (3₁, 3₂) are covered with a gas-tight protective layer (4) to obtain a catalytically inactive sensor.

17. Method for fabricating the sensor according to Claim 2, characterized in that the thin film (2) sensitive to reducing gases is applied by HF-sputtering, the source of material employed being a Ga₂O₃ ceramic target, the substrate body (1) being heated to a temperature of preferably 500°C, and the sputtering gas argon being admixed with an oxygen fraction in the range of from 10 to 30, preferably 20 per cent by volume.

18. Method for fabricating the sensor according to Claim 2, characterized in that the thin layer (2) sensitive to reducing gases is applied by means of a screen-printing technique.

19. Method for fabricating the sensor according to Claim 17 or 18, characterized in that the contact electrodes are applied by means of screen-printing.

20. Method for fabricating the sensor according to Claim 17 or 18, characterized in that the contact electrodes are applied by means of a Pt film being deposited by sputtering and are patterned by means of photolithography followed by plasma etching.

21. Method for fabricating the sensor according to Claim 8, characterized in that, in a first step, a first layer of the Ga₂O₃ thin film (2) is applied, in that, in a second step, the first layer of the Ga₂O₃ thin film (2) has the contact electrode arrangement (3) applied thereto, and in that, in a third step, a second layer of the Ga₂O₃ thin film (2) is applied to embed the contact electrode arrangement (3).

22. Method for fabricating the sensor according to Claim 17, characterized in that, to set the stoichiometry of the Ga₂O₃ thin film (2) and to achieve the required crystal structure of the Ga₂O₃ thin film (2), a tempering process is carried out in air at temperatures around preferably 1100°C.

23. Method for fabricating the sensor according to Claim 17, characterized in that, to set the stoichiometry of the Ga₂O₃ thin film (2) and to achieve the required crystal structure of the Ga₂O₃ thin film (2), a tempering process is carried out under reducing conditions at temperatures around preferably 1100°C.

## Revendications

1. Capteur pour la détection de gaz réducteurs, sur la base d'un matériau semiconducteur sensible aux gaz réducteurs et qui est constitué par un ou plusieurs oxydes métalliques semiconducteurs, un dispositif d'électrodes de contact pour la mesure de la conductivité électrique du matériau, un dispositif de chauffage pour chauffer le capteur à une température de service prédéterminée, une coque protectrice, qui protège le capteur vis-à-vis d'influences mécaniques extérieures, et un socle de fixation, caractérisé par le fait que le matériau sensible aux gaz réducteurs est constitué par une céramique en Ga₂O₃ et que la température de service prédéterminée est inférieure à 700°C et est située de préférence dans une gamme de 550-600°C.

2. Capteur suivant la revendication 1, caractérisé par le fait que le matériau sensible pour les gaz réducteurs est réalisé sous la forme d'une couche mince (2) de Ga₂O₃ disposée sur un corps de support non électriquement conducteur (1).

3. Capteur suivant la revendication 2, caractérisé par le fait que le corps de support (1) est formé par un corps en BeO.

4. Capteur suivant la revendication 2, caractérisé par le fait que le corps de support (1) comporte une couche de revêtement de support (1′), de préférence en BeO, sur laquelle est déposée la couche mince (2).

5. Capteur suivant la revendication 2, caractérisé par le fait que le corps de support (1) comporte une couche de revêtement de support (1′) en SiO₂, sur laquelle est déposée la couche mince (2).

6. Capteur suivant la revendication 3, caractérisé par le fait que le dispositif d'électrodes de contact (3) est déposé directement sur le corps de support (1).

7. Capteur suivant la revendication 4 ou 5, caractérisé par le fait que le dispositif d'électrodes de contact (3) est déposé sur la couche de revêtement (1′) de support.

8. Capteur suivant la revendication 2, caractérisé par le fait que le dispositif d'électrodes de contact (3) est noyé dans la couche mince (2).

9. Capteur suivant la revendication 2, caractérisé par le fait que l'épaisseur de la couche mince (2) est comprise entre 0,5 et 10 mm et de préférence entre 1 et 2 mm.

10. Capteur suivant l'une des revendications 6 à 8, caractérisé par le fait que l'épaisseur des électrodes de contact est comprise entre 1 et 10 mm et de préférence entre 2 et 3 mm.

11. Capteur suivant l'une des revendications 6 à 8, caractérisé par le fait que les électrodes de contact sont en Pt.

12. Capteur suivant la revendication 1, caractérisé par le fait qu'au voisinage du matériau sensible aux gaz réducteurs est disposée une sonde de température (6;7), qui détecte la température de service réelle et dont le signal de détection est utilisé, de préférence, pour effectuer un réglage sur la température de service de consigne.

13. Capteur suivant la revendication 2, caractérisé par le fait que sur le corps de support (1) sont disposés une multiplicité de capteurs identiques et/ou de capteurs de type différent.

14. Capteur suivant la revendication 2, caractérisé par le fait que sur le corps de support (1) sont disposés, par couples, au moins un capteur (2₂) encapsulé d'une manière étanche aux gaz, et un capteur non encapsulé (2₁) servant à compenser la dépendance de la conductivité électrique du capteur vis-à-vis de la température.

15. Capteur suivant la revendication 14, caractérisé par le fait que le capteur (2₂) encapsulé d'une manière étanche aux gaz et le capteur non encapsulé (2₁) forment, selon un circuit série, une branche d'un pont de Wheatstone et que l'autre branche du pont est formée par un circuit série constitué de deux résistances ohmiques, la différence de potentiel entre les points de jonction entre les deux capteurs (2₁, 2₂), d'une part, et les deux résistances ohmiques de l'autre branche du pont, d'autre part, étant utilisée en tant que signal de sortie.

16. Capteur suivant l'une des revendications 1 à 15, caractérisé par le fait que les électrodes de raccordement sont reliées à des électrodes respectives de raccordement (3₁,3₂), qui sont réalisées de préférence en Pt et ressortent du capteur et que les électrodes de raccordement (3₁,3₂) sont recouvertes d'une couche de protection (4) étanche aux gaz, pour l'obtention d'un capteur non actif du point de vue catalytique.

17. Procédé pour fabriquer le capteur suivant la revendication 2, caractérisé par le fait que la couche mince (2) sensible aux gaz réducteurs est déposée par pulvérisation cathodique HF, auquel cas comme source de matériau on utilise une cible céramique en Ga₂O₃, on chauffe le corps de support (1) à une température égale, de préférence, à 500°C et on mélange au gaz de pulvérisation, qui est l'argon, un pourcentage d'oxygène situé dans la gamme de 10 à 30 et de préférence égal à 20 pour cent en volume.

18. Procédé pour fabriquer un capteur suivant la revendication 2, caractérisé par le fait qu'on dépose la couche mince (2) sensible aux gaz réducteurs au moyen d'une technologie de sérigraphie.

19. Procédé pour fabriquer le capteur suivant la revendication 17 ou 18, caractérisé par le fait qu'on dépose les électrodes de contact par sérigraphie.

20. Procédé pour fabriquer le capteur suivant la revendication 17 ou 18, caractérisé par le fait qu'on dépose les électrodes de contact au moyen d'une pulvérisation cathodique d'une pellicule de Pt et qu'on la structure par photolithographie et post-corrosion plasmatique ultérieure.

21. Procédé pour fabriquer le capteur suivant la revendication 8, caractérisé par le fait que lors d'une première étape, on dépose une première pellicule de la couche mince (2) en GA₂O₃, que lors d'une seconde étape, on dépose le dispositif d'électrodes de contact (3) sur la première pellicule de la couche mince (2) en Ga₂O₃ et que lors d'une troisième étape, on dépose une seconde pellicule de la couche mince (2) en Ga₂O₃ pour enrober le dispositif d'électrodes de contact (3).

22. Procédé pour fabriquer le capteur suivant la revendication 17, caractérisé par le fait que pour le réglage de la stoechiométrie de la couche mince (2) en Ga₂O₃ et pour l'obtention de la structure cristalline requise de la couche (2) en Ga₂O₃, on exécute un processus de recuit dans l'air à des températures avoisinant de préférence 1100°C.

23. Procédé pour fabriquer le capteur suivant la revendication 17, caractérisé par le fait que pour le réglage de la stoechiométrie de la couche mince (2) en Ga₂O₃ et pour l'obtention de la structure cristalline requise de la couche mince (2) en Ga₂O₃, on exécute un processus de recuit dans des conditions réductrices à des températures avoisinant de préférence 1100°C.
